# FASCICULE DE BREVET EUROPEEN

(11) **EP 2 030 295 B1**
(45) Date de publication et mention de la délivrance du brevet: **08.06.2011**
(21) Numéro de dépôt: 07788943.4
(22) Date de dépôt: 12.04.2007
(51) Int. Cl.: H02G 3/04

(54) **COUVERCLE DE GOULOTTE POUR FILS ELECTRIQUES POURVU D'UN ELEMENT DE MAINTIEN DES FILS, GOULOTTE POURVUE D'UN TEL COUVERCLE ET UTILISATION DE CETTE GOULOTTE DANS L'INDUSTRIE AUTOMOBILE**
MIT EINEM DRAHTHALTEELEMENT AUSGESTATTETE DRAHTLEITUNGSABDECKUNG, LEITUNG MIT EINER SOLCHEN ABDECKUNG UND VERWENDUNG DER LEITUNG IN DER AUTOMOBILINDUSTRIE
ELECTRIC WIRE DUCT COVER PROVIDED WITH A WIRE-RETAINING ELEMENT, DUCT PROVIDED WITH SUCH A COVER, AND USE OF THIS DUCT IN THE AUTOMOTIVE INDUSTRY

(30) Priorité: 22.06.2006 FR 0605595
(43) Date de publication de la demande: 04.03.2009
(73) Titulaire: Renault S.A.S., 92100 Boulogne-Billancourt (FR)
(72) Inventeur: CARMONA, Pedro, 78180 Montigny-le-Bretonneux (FR); ROY, Arnaud, 92160 Antony (FR)
(86) Numéro de dépôt international: PCT/FR2007/051107
(87) Numéro de publication internationale: WO 2007/147984

(56) Documents cités:
- DE-C- 749 570
- FR-A- 730 379
- FR-A- 2 239 031
- FR-A1- 2 691 227

## Description

L'invention concerne un couvercle de goulotte pour fils électriques pourvu d'un élément de maintien des fils, une goulotte pourvue d'un tel couvercle, ainsi que l'utilisation de cette goulotte dans l'industrie automobile.

Les fils électriques sont généralement placés à l'intérieur de goulottes qui permettent de les contenir et de les protéger. Ces goulottes présentent généralement un profilé sensiblement en U recevant les fils.

Si l'on ne prévoit pas de moyens de maintien des fils, ces derniers ont tendance à sortir du cheminement prévu par la goulotte.

Le maintien des fils à l'intérieur de la goulotte peut être assuré par un adhésif maintenant en place les fils. L'utilisation d'un adhésif est cependant chère et ne permet pas une mise en place précise des fils.

Il existe d'autres systèmes permettant de maintenir un nombre variable de fils à l'intérieur d'une goulotte.

Par exemple, le document FR 2 647 523, décrit un dispositif comprenant deux plaques reliées par un tirant, l'une des plaques étant maintenue au fond de la goulotte, et l'autre rabattant les fils vers le fond de la goulotte au moyen du tirant. Ce dispositif présente l'inconvénient de nécessiter de nombreuses pièces.

Un autre dispositif décrit dans le document FR 2 719 167 consiste en une lanière maintenue par un support monté sur des rails solidaires du fond de la goulotte. Ce dispositif s'avère complexe et long à mettre en oeuvre : chaque lanière doit en effet être serrée autour des fils manuellement, et il est nécessaire de prévoir des rails sur le fond de la goulotte pour le support de lanière.

Le document FR 730 739 décrit un couvercle de goulotte avec les charactéristiques techniques du préamble de la revendication 1.

Une autre solution consiste à utiliser un couvercle qui ferme le profilé de la goulotte. Un tel couvercle n'empêche cependant pas les fils de se déplacer à l'intérieur de la goulotte, notamment lorsque cette dernière n'est pas beaucoup remplie. Il en résulte une protection mécanique des fils moins performante. Par ailleurs, dans certaines applications, notamment dans l'industrie automobile, il n'est pas toujours souhaitable que le couvercle s'étende sur toute la longueur de la goulotte, par exemple pour permettre la sortie des fils, pour limiter la quantité de matière utilisée, ou encore pour simplifier la réalisation du couvercle en ne réalisant que des portions rectilignes de couvercle.

L'invention vise à pallier ces inconvénients en proposant un couvercle de goulotte pour fils électriques pourvu d'un élément de maintien des fils.

A cet effet, l'objet de l'invention concerne un couvercle de goulotte pour fils électriques, formé d'une plaque sensiblement rectangulaire pourvue de deux bords longitudinaux opposés destinés à coopérer avec une goulotte afin de la fermer, les bords longitudinaux étant reliés par deux bords transversaux, caractérisé en ce qu'au moins un bord transversal est pourvu d'un élément de maintien élastique des fils destiné à plaquer au moins un fil au fond de la goulotte lorsque le couvercle coopère avec la goulotte.

Avantageusement, chaque bord transversal du couvercle est pourvu d'un élément de maintien.

L'élasticité de l'élément de maintien permet de maintenir au fond de la goulotte un nombre variable de fils électriques. De plus, le plaquage du ou des fils au fond de la goulotte permet d'absorber les variations des fils, ce qui est avantageux pour une utilisation dans un véhicule automobile. Enfin, le plaquage des fils en fond de goulotte assure une bonne protection mécanique des fils.

Avantageusement, l'élément de maintien est une languette élastique saillant du bord transversal en s'éloignant du couvercle, suivant une direction inclinée par rapport à la plaque du couvercle.

L'élément de maintien présente alors une forme très simple à réaliser, et donc peu coûteuse. De plus, il permet d'augmenter la surface de protection des fils de la goulotte contre les agressions physiques, ce qui permet de réduire la longueur d'habillage des fils à l'intérieur de la goulotte.

De préférence, l'extrémité libre de la languette s'étend dans un plan sensiblement parallèle au plan de la plaque du couvercle, ce qui permet d'éviter une détérioration des fils plaqués.

Avantageusement, l'élément de maintien est venu de matière avec le couvercle. Il peut ainsi être réalisé de manière très simple et peu coûteuse, en même temps que le couvercle.

L'invention concerne une goulotte de maintien de fils électriques pourvue d'un couvercle selon invention.

L'invention concerne également l'utilisation d'une goulotte selon l'invention pour maintenir au moins un fils à l'intérieur d'un véhicule automobile.

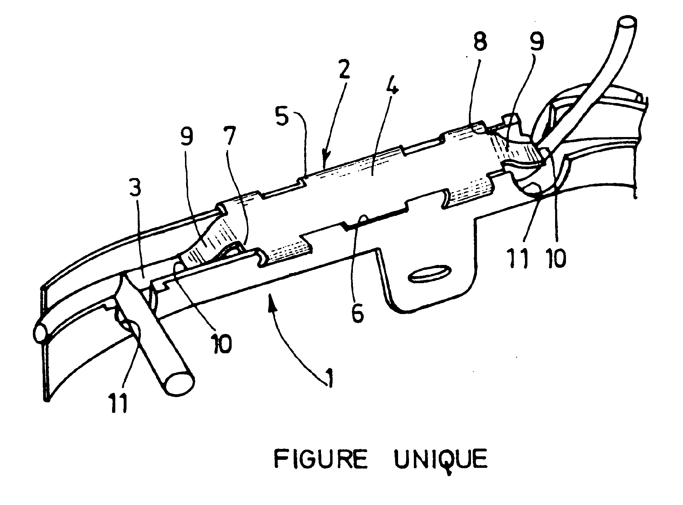

L'invention est maintenant décrite en référence au dessin annexé, non limitatif, dans lequel la figure unique est une représentation en perspective d'une goulotte selon l'invention.

Sur cette figure sont représentés une goulotte 1 munie d'un couvercle 2 à l'intérieur de laquelle est maintenu un câble électrique 3.

La goulotte 1 comprend de manière conventionnelle une section sensiblement en forme de U à l'intérieur de laquelle est logé le câble électrique 3.

Le couvercle 2 est formé d'une plaque 4 sensiblement rectangulaire pourvue de deux bords longitudinaux opposés 5, 6 destinés à coopérer avec la goulotte 1 afin de la fermer.

Tout type de moyen connu permettant d'associer de manière réversible ou non le couvercle à la goulotte peut être utilisé.

Ces bords longitudinaux 5, 6 sont reliés par deux bords transversaux 7, 8.

Dans l'exemple représenté, chaque bord transversal 7, 8 est pourvu d'un élément de maintien élastique des fils destiné à plaquer au moins un fil au fond de la goulotte.

Dans l'exemple, chaque élément de maintien est une languette élastique 9 saillant du bord transversal 7, 8 correspondant en s'éloignant du couvercle suivant une direction inclinée par rapport à la plaque 4 du couvercle. Ainsi, chaque languette s'éloigne à la fois du côté de la plaque 4 du couvercle destiné à faire face au fond de la goulotte, et du bord transversal 7, 8 correspondant.

Lorsque le couvercle ferme la goulotte, l'extrémité 10 de chaque languette vient ainsi en appui contre le câble électrique 3 situé dans la goulotte, la longueur de chaque languette étant suffisante pour assurer un bon maintien d'au moins câble ou fil électrique.

Par ailleurs, il est préférable que l'extrémité libre 10 de chaque languette 9, en appui contre le câble 3, s'étende dans un plan sensiblement parallèle au plan du couvercle, afin d'éviter de blesser le câble 3 plaqué dans le fond de la goulotte.

En choisissant une largeur de languette légèrement inférieure à la largeur de la goulotte, on augmente la surface de protection procurée par le couvercle. Une largeur plus faible de languette peut bien sûr être choisie.

Les éléments de maintien sont venus de matière avec le couvercle. Ce couvercle peut être en matière plastique ou en métal.

L'utilisation de la goulotte 1 munie de son couvercle 2 est notamment adaptée pour maintenir des fils à l'intérieur d'un véhicule automobile.

Le couvercle assure en effet une bonne protection du ou des fils maintenus, notamment à proximité d'ouvertures 11 réalisées dans la goulottes pour la sortie d'un ou plusieurs fils. Le fil sortant est ainsi maintenu dans la goulotte jusqu'à son point de sortie.

Bien entendu, des variantes de l'élément de maintien peuvent être envisagées. L'élément de maintient peut par exemple consister en un ou plusieurs fils métallique, en une ou plusieurs languettes de la même matière ou d'une autre matière que le couvercle.

## Revendications

1. Couvercle (2) de goulotte pour fils électriques, formé d'une plaque (4) sensiblement rectangulaire pourvue de deux bords longitudinaux opposés (5, 6) destinés à coopérer avec une goulotte (1) afin de la fermer, les bords longitudinaux (5, 6) étant reliés par deux bords transversaux (7, 8), **caractérisé en ce qu'**au moins un bord transversal (7, 8) est pourvu d'un élément de maintien élastique des fils destiné à plaquer au moins un fil au fond de la goulotte lorsque le couvercle coopère avec la goulotte.

2. Couvercle de goulotte selon la revendication 1, **caractérisé en ce que** chaque bord transversal (7, 8) du couvercle est pourvu d'un élément de maintien,

3. Couvercle de goulotte selon la revendication 1 ou 2, **caractérisé en ce que** l'élément de maintien est une languette élastique (9) saillant du bord transversal (7, 8) en s'éloignant du couvercle, suivant une direction inclinée par rapport à la plaque (4) du couvercle.

4. Couvercle de goulotte selon l'une des revendications 1 à 3, **caractérisé en ce que** l'extrémité libre (10) de la languette (9) s'étend dans un plan sensiblement parallèle au plan de la plaque du couvercle.

5. Couvercle de goulotte selon l'une des revendications 1 à 4, **caractérisé en ce que** l'élément de maintien est venu de matière avec le couvercle.

6. Goulotte (1) de maintien de fils électriques pourvue d'un couvercle selon l'une des revendications 1 à 5.

7. Utilisation d'une goulotte. (1) selon la revendication 6 pour maintenir au moins un fil à l'intérieur d'un véhicule automobile.

## Claims

1. Electric-wire duct cover (2) formed of a substantially rectangular plate (4) provided with two opposite longitudinal edges (5, 6) designed to interact with a duct (1) in order to close it off, the longitudinal edges (5, 6) being connected by two transverse edges (7, 8), **characterized in that** at least one transverse edge (7, 8) is provided with an elastic element for retaining the wires designed to press at least one wire to the bottom of the duct when the cover interacts with the duct.

2. Duct cover according to Claim 1, **characterized in that** each transverse edge (7, 8) of the cover is provided with a retaining element.

3. Duct cover according to Claim 1 or 2, **characterized in that** the retaining element is an elastic tab (9) protruding from the transverse edge (7, 8) moving away from the cover, in a direction that is inclined relative to the plate (4) of the cover.

4. Duct cover according to one of Claims 1 to 3, **characterized in that** the free end (10) of the tab (9) extends in a plane substantially parallel to the plane of the plate of the cover.

5. Duct cover according to one of Claims 1 to 4, **characterized in that** the retaining element is made of the same material with the cover.

6. Electric-wire retaining duct (1) provided with a cover according to one of Claims 1 to 5.

7. Use of a duct (1) according to Claim 6 for retaining at least one wire inside a motor vehicle.

## Patentansprüche

1. Deckel (2) eines Kabelkanals für Stromkabel, der von einer im Wesentlichen rechteckigen Platte (4) geformt wird, die mit zwei einander gegenüberliegenden Längsrändern (5, 6) versehen ist, die dazu bestimmt sind, mit einem Kabelkanal (1) zusammenzuwirken, um ihn zu schließen, wobei die Längsränder (5, 6) über zwei Querränder (7, 8) miteinander verbunden sind, **dadurch gekennzeichnet, dass** mindestens ein Querrand (7, 8) mit einem elastischen Halteelement der Kabel versehen ist, das dazu bestimmt ist, mindestens ein Kabel gegen den Boden des Kabelkanals zu drücken, wenn der Deckel mit dem Kabelkanal zusammenwirkt.

2. Kabelkanaldeckel nach Anspruch 1, **dadurch gekennzeichnet, dass** jeder Querrand (7, 8) des Deckels mit einem Halteelement versehen ist.

3. Kabelkanaldeckel nach Anspruch 1 oder 2, **dadurch gekennzeichnet, dass** das Halteelement eine elastische Zunge (9) ist, die vom Querrand (7, 8) vorsteht, indem sie sich vom Deckel gemäß einer bezüglich der Platte (4) des Deckels geneigten Richtung entfernt.

4. Kabelkanaldeckel nach einem der Ansprüche 1 bis 3, **dadurch gekennzeichnet, dass** das freie Ende (10) der Zunge (9) sich in einer Ebene im Wesentlichen parallel zur Ebene der Platte des Deckels erstreckt.

5. Kabelkanaldeckel nach einem der Ansprüche 1 bis 4, **dadurch gekennzeichnet, dass** das Halteelement aus einem Stück mit dem Deckel geformt wird.

6. Kabelkanal (1) für den Halt von Stromkabeln, der mit einem Deckel nach einem der Ansprüche 1 bis 5 versehen ist.

7. Verwendung eines Kabelkanals (1) nach Anspruch 6 für den Halt mindestens eines Kabels im Inneren eines Kraftfahrzeugs.
